# FASCICULE DE BREVET EUROPEEN

(11) **EP 0 346 199 B1**
(45) Date de publication et mention de la délivrance du brevet: **17.11.1994**
(21) Numéro de dépôt: 89401536.1
(22) Date de dépôt: 05.06.1989
(51) Int. Cl.: C08K 5/00, C08L 29/14, C09J 129/14, C08J 7/00

(54) **Utilisation d'une composition thermoplastique à base de polyvinybutyral pour la fixation d'embases sur un vitrage**
Verwendung einer thermoplastischen Zusammensetzung auf Polyvinybutyralbasis zur Befestigung von Stützplatten auf einer Glasscheibe
Use of a thermoplastic composition based on polyvinyl butyral for affixing supports to a glass pane

(30) Priorité: 07.06.1988 FR 8807531
(43) Date de publication de la demande: 13.12.1989
(73) Titulaire: SAINT-GOBAIN VITRAGE INTERNATIONAL, 92400 Courbevoie (FR)
(72) Inventeur: Dages, Daniel M., F-78130 Les Mureaux (FR)
(74) Mandataire: Luziau, Nelly

(56) Documents cités:
- EP-A- 0 102 502
- EP-A- 0 148 397
- US-A- 3 950 305
- R. Gächter, H. Müller, Taschenbuch der Kunststoffadditive, 2. Ausgabe, 1983, Carl Hanser Verlag, München, p. 12, 13, 441

## Description

L'invention est relative à l'utilisation d'une composition thermoplastique à base de polyvinylbutyral (PVB) plastifié, pour le collage d'embases sur un vitrage.

Il est connu d'utiliser des polymères thermoplastiques, comme du polyvinylbutyral plastifié, pour coller des embases sur un vitrage. Ces embases peuvent servir ensuite à fixer des objets, tels que des rétroviseurs.

Généralement, on applique à chaud un film de résine de polyvinylbutyral plastifié sur la surface d'une embase, métallique par exemple. L'ensemble est ensuite chauffé et la face de l'embase portant le film de polyvinylbutyral est collée sur la surface de verre par application d'une pression appropriée pendant quelques secondes. Le collage définitif est obtenu en autoclave. Un objet, tel qu'un rétroviseur, peut alors être fixé à l'embase.

L'embase peut être soumise à différentes contraintes mécaniques, dues à la manipulation de l'objet qui s'y trouve fixé, par exemple dues au réglage d'un rétroviseur. Elle peut aussi être soumise à des conditions thermiques variées, notamment à des températures élevées lorsque le vitrage est chauffé par le soleil.

Le film thermoadhésif de polyvinylbutyral doit en conséquence présenter certaines propriétés et notamment une bonne adhérence au verre et à la matière constituant l'embase, en général métallique, et une bonne tenue à la température élevée.

La demande de brevet français n° 87 04 620 correspondant au document EP-A-0 287 416, déposée le 2 Avril 1987 par la Demanderesse décrit une résine de polyvinylbutyral plastifié présentant des propriétés d'adhérence sur le verre et de tenue à la température améliorées et donc utile pour le collage d'embases sur des vitrages. Le polymère est préparé à partir d'alcool polyvinylique, ayant un taux d'hydrolyse supérieur à 95 % et une viscosité supérieure à 0,05 Pas, et d'aldéhyde butyrique en quantité suffisante pour que le taux de groupe hydroxyle du polymère soit compris entre 22 et 26 % en poids par rapport au polymère.

Le polyvinylbutyral (PVB) décrit dans ce brevet, qui présente une masse moléculaire assez élevée (entre 300 000 et 500 000 en poids) et un taux élevé de groupe hydroxyle, a une bonne adhérence au verre et permet d'améliorer la tenue aux températures élevées du film obtenu à partir de ce polymère.

Les polymères de masse moléculaire élevée présentent l'inconvénient d'une grande rigidité qui entraîne des difficultés lors de leur formage. On observe en outre des défauts (formation de bulles) lorsque, en particulier, l'épaisseur du film n'est pas uni forme ou lorsque le vitrage sur lequel est collé le film, a une forte courbure, ce qui nuit à l'aspect du vitrage.

Il serait souhaitable de pouvoir utiliser, pour le collage d'embases, des résines de masse moléculaire assez élevée telles que celles décrites à la demande de brevet précitée, mais aussi des résines de masse moléculaire plus faible pour éviter des inconvénients au formage, et qui, toutes, permettent de former des films ayant une tenue appropriée aux températures élevées et ne présentent pas des problèmes d'aspect au collage.

Le document EP-A-0 102 502 décrit une composition thermoplastique à base de PVB pour la formation d'une couche intercalaire pour vitrage feuilleté. La composition comprend du PVB, un plastifiant, un stabilisant phénolique et du triester de l'acide phosphoreux.

La présente invention a donc pour objet l'utilisation d'un film thermoadhésif stable thermiquement et ayant une bonne adhérence, notamment au verre, pour le collage d'embases sur un vitrage, ce film étant obtenu à partir d'une composition thermoplastique à base de résine de polyvinylbutyral.

La composition thermoplastique utilisée en tant que film thermoadhésif selon l'invention comprend une résine de polyvinylbutyral et un plastifiant pour la résine ; elle est caractérisée en ce que la résine a un taux de groupe hydroxyle compris entre 22 et 26 % en poids ; elle comprend en outre un antioxydant phénolique orthosubstitué.

L'antioxydant est de préférence un composé phénolique substitué en ortho par un groupe butyle tertiaire.

L'antioxydant est de préférence choisi dans le groupe formé par le ditertio-butylparacrésol, le tris (2,4-ditertiobutylphényl) phosphite, le 3,5-(ditertiobutyl-4-hydroxyphenyl) octadécylpropionate et le pentaérythrityl tetrakis-(3,5-ditertiobutyl-4-hydroxyphénylpropionate).

La quantité d'antioxydant est généralement supérieure à 0,5 partie en poids pour 100 parties de résine, et de préférence, elle est comprise entre 0,5 et 2 parties en poids.

La résine de polyvinylbutyral peut être obtenue par tout procédé connu, mais elle doit avoir un taux de groupe hydroxyle compris entre 22 et 26 % en poids. Une résine ayant un taux d'hydroxyle inférieur à 22 % ne présente pas les propriétés souhaitées pour le collage d'embases, notamment l'adhérence appropriée sur le verre. Lorsque le taux d'hydroxyle dans le polyvinylbutyral est supérieur à 26 %, le produit final est trop rigide, sa mise en oeuvre est difficile et le collage n'est pas satisfaisant. La masse moléculaire de la résine est de préférence comprise entre 100 000 et 500 000.

Une résine de masse moléculaire trop élevée présente une forte rigidité qui peut provoquer des défauts de collage.

Comme plastifiants, on peut utiliser tout composé compatible avec la résine de polyvinylbutyral. Des plastifiants appropriés pour les polyvinylbutyrals utiles dans l'invention sont, par exemple, le diéthyl-2-butyrate de triéthylèneglycol, le sébaçate de di-butyle, l'adipate de di-hexyle, le dibutoxyéthyladipate et ceux décrits dans les demandes de brevets européens n° 11 577 et 47 215, c'est-à-dire l'adipate d'octyle et de benzyle et un mélange de cet adipate d'octyle et de benzyle avec de l'adipate de di-n-hexyle.

La quantité de plastifiant utile dépend de la teneur en groupes hydroxyle résiduels du polymère et peut être facilement déterminée par le spécialiste.

On peut utiliser dans l'invention de 17 à 30 parties en poids de plastifiant pour 100 parties de résine de polyvinylbutyral.

La composition utilisée selon l'invention peut contenir d'autres adjuvants tels que des pigments comme du noir de carbone, des composés anti-ultraviolet, des stabilisants, etc...

La composition utilisée selon l'invention peut aussi contenir des composés organosoufrés, comme le dilauryl thiodipropionate, qui associés à des antioxydants phénoliques, augmentent d'une manière synergique leur activité. D'autre part, ces composés organosoufrés sont utiles lorsque la composition thermoplastique contient du noir de carbone. En effet, ce dernier peut provoquer une diminution de l'activité des antioxydants. L'addition de composés organosoufrés permet de régénérer l'activité des antioxydants phénoliques. Ces composés organosoufrés sont ajoutés par exemple en quantité supérieure à 0,1 partie en poids pour 100 parties de résine de PVB.

On peut préparer la composition thermoplastique par tout procédé classique. Ainsi, on peut introduire la résine de PVB dans un mélangeur et ajouter ensuite le plastifiant associé à l'antioxydant et aux autres additifs s'il y en a.

Après obtention d'un mélange homogène, on peut l'extruder pour former des films ayant une épaisseur par exemple de 0,3 à 1 mm.

Les films obtenus sont découpés aux dimensions désirées et fixés à chaud sur des embases destinés à être collés sur un vitrage. Ces embases peuvent être en tout matériau approprié, par exemple en acier, en nickel, en aluminium, en alliage métallique, etc... Ces embases munies du film de résine de PVB sont chauffées, puis fixées par pression sur un vitrage préchauffé.

Les exemples suivants, non limitatifs, illustrent l'invention.

### EXEMPLE 1

On prépare une composition thermoplastique en mélangeant de la résine de PVB ayant une masse moléculaire de 400 000 environ et un taux d'hydroxyle de 25 % avec, comme plastifiant, un mélange comprenant 65 % en poids d'adipate d'octyle et de benzyle et 35 % en poids d'adipate de n-hexyle. La quantité de plastifiant est de 25 parties en poids pour 100 parties de résine.

On ajoute du ditertiobutylparacrésol comme antioxydant à raison de 2 parties en poids pour 100 parties de résine.

On extrude le mélange pour obtenir un film de 0,76 mm d'épaisseur et de 5 cm de largeur.

On découpe le film en bandes de dimensions désirées et on les applique à chaud (90°C environ) sur une embase nickelée. On chauffe l'embase muni du film de PVB à environ 90°C et on presse la face de l'embase portant le film sur une feuille de verre préchauffée à 80°C environ, pendant 8 secondes environ.

Le collage définitif de l'embase sur la feuille de verre (pour obtenir un produit A) est effectué en autoclave à 140°C environ pendant 30 minutes environ.

A titre de témoin, on prépare de la même manière un assemblage verre/PVB/embase (produit B) dans lequel le PVB n'est pas associé à un antioxydant.

Les assemblages obtenus sont soumis aux tests suivants pour déterminer la tenue aux températures élevées du film de PVB, c'est-à-dire sa résistance à l'arrachement à température élevée (test de fluage à chaud) et pour évaluer l'adhérence du film à la surface de verre.

### Fluage à chaud

Un échantillon de l'assemblage verre/PVB/embase est maintenu verticalement. On fixe un bras de levier de 50 mm de longueur sur l'embase et on applique une charge de 500 g à l'extrémité du bras de levier. On place l'ensemble dans une enceinte à 90°C pendant 72 heures.

Pour que le test soit positif, l'embase ne doit pas se décoller.

### Test d'adhérence à une surface de verre

### 1) Test de Clivage

### Clivage normal

On fixe un bras de levier de 25 mm de longueur sur l'embase collée au verre. On soumet l'embase à une force de traction exercée parallèlement à la surface du verre, à une vitesse de 10 mm/min.

L'embase doit résister à une force supérieure à 50 daN.

### Clivage humide

On opère de la même façon que précédemment après avoir fait subir aux embases collées un cycle d'humidité de 72 heures à 60°C et 100 % d'humidité. L'embase doit résister à une force supérieure à 50 daN.

### 2) Test de torsion

On fait subir à l'embase une torsion à l'aide d'une clef dynamométrique.
a) le collage doit résister à un couple de torsion d'au moins 30 m.N.
b) le collage doit résister à un couple de torsion de 20 m.N pendant 30 secondes.

Les tests auxquels sont soumis des échantillons des deux produits A et B obtenus à l'exemple 1 donnent les résultats suivants :

| | |
|---|---|
| - test de fluage à chaud | bon |
| - clivage à 20°C | 90 daN |
| - clivage humide | 80 daN |
| - test de torsion a) | 49 m.N |
| - test de torsion b) | bon. |

Le produit B témoin ne se décolle pas lors du test de fluage à chaud, mais on observe à l'interface verre/PVB de nombreuses bulles qui sont visibles à travers le vitrage et donc nuisibles à l'aspect de ce dernier.

### EXEMPLE 2

On prépare, comme à l'exemple 1, un produit verre/PVB/embase selon l'invention et un produit témoin dans lequel le PVB n'est pas associé à un antioxydant. Dans les deux produits, on utilise une résine de PVB ayant une masse moléculaire de 300 000, un taux d'hydroxyle de 25 % et plastifiée par 25 parties en poids de dibutoxy-éthyl adipate.

Seule l'embase fixée avec le film thermoadhésif selon l'invention satisfait au test de fluage à chaud.

Les films de PVB adhèrent bien au vitrage.

Cet exemple montre que, même en utilisant du PVB de masse moléculaire moins élevée, on peut obtenir une adhérence et une tenue aux températures élevées convenables pour la fixation d'embases sur un vitrage.

### EXEMPLE 3

On prépare, comme à l'exemple 1, un produit verre/PVB/embase selon l'invention, mais on utilise une résine de PVB ayant une masse moléculaire de 250 000 environ et un taux d'hydroxyle de 26 % et plastifiée en utilisant 22 parties en poids du plastifiant de l'exemple 1. L'antioxydant représente 1 partie en poids pour 100 parties de résine.

On compare le produit obtenu au produit (A) selon l'invention préparée à l'exemple 1, dans lequel le PVB a une masse moléculaire de 400 000 environ et dans lequel l'antioxydant est utilisé en quantité de 2 parties pour 100 parties en poids de résine.

On note une amélioration de l'adhérence dans le cas du produit préparé à cet exemple, comparée à celle du produit A de l'exemple 1.

Le test de fluage à chaud est bon.

Cet exemple montre que la présence d'un antioxydant dans la composition thermoplastique permet d'utiliser un PVB de masse moléculaire moyenne, obtenant ainsi une bonne adhérence au verre et, en outre, une tenue aux températures élevées satisfaisante, même en diminuant la quantité d'antioxydant.

### EXEMPLE 4

On opère comme à l'exemple 1 pour le produit A, mais on utilise du PVB ayant une masse moléculaire de 250 000 environ, un taux d'hydroxyle de 22 % et plastifié en utilisant 26 parties en poids du plastifiant de l'exemple 1, et comme antioxydant du tris-(ditertiobutylphényl) phosphite commercialisé sous la marque ("Irganox 168" par Ciba-Geigy) à raison de 1 partie en poids pour 100 parties de résine.

On prépare un produit analogue à partir d'une composition thermoplastique contenant en outre 1,7 partie en poids pour 100 parties de résine, de noir animal (de Prolabo). Pour les deux produits, l'adhérence est bonne et le test de fluage à chaud est satisfaisant.

### EXEMPLE 5

On opère comme à l'exemple 4, mais on remplace l'antioxydant "Irganox 168" par du 3,5-(di-tertiobutyl-4-hydroxyphényl) octadécyl propionate (commercialisé sous la marque "Irganox 1076" par Ciba-Geigy) et le noir animal de Prolabo par du noir de fumée commercialisé sous la marque "Printex 95" par Degussa.

Les tests d'adhérence et de fluage à chaud sont satisfaisants.

### EXEMPLE 6

On opère comme à l'exemple 5, mais on utilise l'antioxydant en quantité de 0,6 partie en poids pour 100 parties de résine et on ajoute 0,4 partie en poids pour 100 parties de résine de composé organosoufré, le dilaurylthiodipropionate.

Les tests d'adhérence et de tenue aux températures élevées sont satisfaisantes.

### EXEMPLE 7

A titre de comparaison, on prépare un produit verre/PVB/embase, comme à l'exemple 1, mais la composition thermoplastique contient du PVB ayant une masse moléculaire de 250 000 environ et un taux d'hydroxyle de 25 % et 1 partie en poids de 4-tertiooctyl-phénol comme antioxydant.

L'adhérence est bonne mais la tenue aux températures élevées (test de fluage à chaud) est mauvaise.

## Revendications

1. Utilisation d'un film thermoadhésif obtenu à partir d'une composition thermoplastique comprenant une résine de polyvinylbutyral ayant un taux de groupe hydroxyle compris entre 22 et 26 % en poids par rapport à la résine, un antioxydant phénolique ortho-substitué et un plastifiant pour cette résine, caractérisée en ce que le film est utilisé pour le collage d'une embase sur un vitrage.

2. Utilisation conforme à la revendication 1, caractérisée en ce que la résine a un taux d'hydroxyle de 23 à 25 %.

3. Utilisation conforme à lune des revendications 1 et 2, caractérisée en ce que la masse moléculaire du polyvinylbutyral est comprise entre 100 000 et 500 000.

4. Utilisation conforme à l'une des revendications 1 à 3, caractérisée en ce que l'antioxydant est choisi dans le groupe formé par le ditertiobutylparacrésol, le tris (2,4-ditertiobutylphényl) phosphite, le 3,5-(ditertiobutyl-4-hydroxyphenyl)octadecylpropionate et le pentaerythrityltétrakis (3,5-ditertiobutyl-4-hydroxyphenylpropionate).

5. Utilisation conforme à l'une des revendications 1 à 4, caractérisée en ce qu'elle contient au moins 0,5 partie en poids d'antioxydant pour 100 parties de résine et de préférence de 0,5 à 2 parties.

6. Utilisation conforme à l'une des revendications 1 à 5, caractérisée en ce que le plastifiant est choisi dans le groupe formé par l'adipate d'octyle et de benzyle et un mélange d'adipate d'octyle et de benzyle et d'adipate de di-n-hexyle.

7. Utilisation conforme à l'une des revendications 1 à 6, caractérisée en ce qu'elle comprend de 17 à 30 parties de plastifiant pour 100 parties de résine.

8. Utilisation conforme à l'une des revendications 1 à 6, caractérisée en ce qu'elle contient du noir de carbone.

9. Utilisation conforme à l'une des revendications 1 à 8, caractérisée en ce qu'elle comprend en outre un composé organosoufré.

10. Utilisation conforme à la revendication 9, caractérisée en ce que le composé organosoufré est le dilauryldithiopropionate.

11. Utilisation selon une des revendications 1 à 10, caractérisée en ce que le film a une épaisseur comprise entre 0,3 et 1 mm.

## Claims

1. Use of a thermoadhesive film produced from a thermoplastic composition, containing a polyvinyl butyral resin having a hydroxyl group rate of between 22 and 26% by weight relative to the resin, an orthosubstituted phenolic antioxidant and a plasticizer for this resin, characterized in that the film is used for gluing a base onto a pane.

2. Use according to Claim 1, characterized in that the resin has a hydroxyl rate of 23 to 25%.

3. Use according to one of Claims 1 and 2, characterized in that the molecular mass of the polyvinyl butyral is from 100,000 to 500,000.

4. Use according to one of Claims 1 to 3, characterized in that the antioxidant is chosen from the group formed by ditertiobutylparacresol, tris (2,4-ditertiobutylphenyl) phosphite, 3,5-(ditertiobutyl-4-hydroxyphenyl) octadecylpropionate and pentaerythrityltetrakis (3,5-ditertiobutyl-4-hydroxyphenylpropionate).

5. Use according to one of Claims 1 to 4, characterized in that it contains at least 0.5 parts by weight of antioxidant per 100 parts of resin and preferably from 0.5 to 2 parts.

6. Use according to one of Claims 1 to 5, characterized in that the plasticizer is chosen from the group formed of octyl adipate and benzyl and a mixture of octyl adipate and benzyl and di-n-hexyl adipate.

7. Use according to one of Claims 1 to 6, characterized in that it comprises from 17 to 30 parts of plasticizer per 100 parts of resin.

8. Use according to one of Claims 1 to 6, characterized in that it contains carbon black.

9. Use according to one of Claims 1 to 8, characterized in that it comprises in addition an organosulphured compound.

10. Use according to Claim 9, characterized in that the organosulphured compound is dilauryldithiopropionate.

11. Use according to one of Claims 1 to 10, characterized in that the film has a thickness of from 0.3 to 1 mm.

## Patentansprüche

1. Verwendung einer heißklebenden Folie, ausgehend von einer thermoplastischen Zusammensetzung hergestellt, die ein Polyvinylbutyralharz mit einem Hydroxylgruppenanteil von 22 bis 26 Gew.%, bezogen auf das Harz, ein orthosubstituiertes phenolisches Antioxidationsmittel und einen Weichmacher für dieses Harz umfaßt, **dadurch gekennzeichnet, daß** die Folie zum Ankleben einer Befestigungsfläche auf einer Verglasung verwendet wird.

2. Verwendung nach Anspruch 1, **dadurch gekennzeichnet, daß** das Harz einen Hydroxylanteil von 23 bis 25 % enthält.

3. Verwendung nach Anspruch 1 oder 2, **dadurch gekennzeichnet, daß** die Molmasse des Polyvinylbutyrals 100000 bis 500000 beträgt.

4. Verwendung nach einem der Ansprüche 1 bis 3, **dadurch gekennzeichnet, daß** das Antioxidationsmittel aus der Gruppe ausgewählt ist, die aus Di-*tert*.-butyl-p-kresol, Tris(2,4-di-*tert*.-butylphenyl)phosphit, 3,5-(Di-*tert*.-butyl-4-hydroxyphenyl)-octadecylpropionat und Pentaerythrityl-tetra-kis(3,5-di-*tert*.-butyl-4-hydroxyphenylpropionat) besteht.

5. Verwendung nach einem der Ansprüche 1 bis 4, **dadurch gekennzeichnet, daß** sie wenigstens 0,5 und vorzugsweise 0,5 bis 2 Gewichtsteile Antioxidationsmittel auf 100 Teile Harz enthält.

6. Verwendung nach einem der Ansprüche 1 bis 5, **dadurch gekennzeichnet, daß** der Weichmacher aus der Gruppe ausgewählt ist, die aus Octyladipat und Benzyladipat und einem Gemisch von Octyladipat, Benzyladipat und Di-n-hexyladipat besteht.

7. Verwendung nach einem der Ansprüche 1 bis 6, **dadurch gekennzeichnet, daß** sie 17 bis 30 Teile Weichmacher auf 100 Teile Harz enthält.

8. Verwendung nach einem der Ansprüche 1 bis 6, **dadurch gekennzeichnet, daß** sie Ruß enthält.

9. Verwendung nach einem der Ansprüche 1 bis 8, **dadurch gekennzeichnet, daß** sie außerdem eine schwefelorganische Verbindung enthält.

10. Verwendung nach Anspruch 9, **dadurch gekennzeichnet, daß** die schwefelorganische Verbindung Dilauryldithiopropionat ist.

11. Verwendung nach einem der Ansprüche 1 bis 10, **dadurch gekennzeichnet, daß** die Folie eine Dicke von 0,3 bis 1 mm aufweist.
